# EUROPEAN PATENT SPECIFICATION

(11) **EP 3 436 925 B1**
(45) Date of publication and mention of the grant of the patent: **05.08.2020**
(21) Application number: 16826535.3
(22) Date of filing: 19.12.2016
(51) Int. Cl.: G06F 3/14

(54) **SECONDARY COMPUTING DEVICE ASSISTANT**
ASSISTENT FÜR SEKUNDÄREN COMPUTER
ASSISTANT DE DISPOSITIF INFORMATIQUE SECONDAIRE

(30) Priority: 30.03.2016 US 201615085940
(43) Date of publication of application: 06.02.2019
(73) Proprietor: Google LLC, Mountain View, CA 94043 (US)
(72) Inventor: ZHA, Tiantian, Mountain View, California 94043 (US); KUSCHER, Alexander Friedrich, Mountain View, California 94043 (US); CHEN, Jennifer Shien-Ming, Mountain View, California 94043 (US); BALASUBRAMANIAN, Santhosh, Mountain View, California 94043 (US)
(74) Representative: Anderson, Oliver Ben
(86) International application number: PCT/US2016/067542
(87) International publication number: WO 2017/171948

(56) References cited:
- US-A1- 2011 207 529
- US-A1- 2015 135 238

## Description

### BACKGROUND

As computing devices become more mobile, users may carry multiple computing devices capable of processing and displaying information. Each computing device may provide different functionality and may include different methods of user interaction. Even when the user has access to more than one computing device, users often interact with only one computing device at a time.

US 2015/135238 A1 describes methods and systems for automatically detecting and pushing content to a second user device in response to determining that a first user device is simultaneously presenting multiple media assets. For example, in response to determining that a first user device is presenting a mosaic display, a media guidance application may automatically search for a second user device in which to present the program. In response to detecting the second user device, the media guidance application may then automatically push, or present an option to push, the program to the second user device.

US 2011/207529 A1 describes communication methods in gaming networks using portable devices. In some networks portable devices communicate information about the status of particular gaming machines on the gaming network. In other networks portable devices are used as a secondary display for the gaming device.

In yet other networks bonus games may be played on the portable devices. Further embodiments include a portable device that operates to match a current state of a game to a pre-defined state or states.

### SUMMARY

The invention is defined by the claims.

Aspects of the subject technology relate to a computer- implemented method for utilizing a secondary computing device to supplement a primary computing device. The method includes determining contents of an active application window displayed on a primary computing device, the primary computing device being associated with a user account. The method further includes identifying a secondary computing device associated with the user account and located proximate to the primary computing device and selecting one or more supplemental items related to the determined contents of the active application window. The method further includes providing the selected one or more supplemental items for display on the secondary computing device while the active application window is displayed on the primary computing device.

Aspects of the subject technology also relate to a system. The system includes one or more processor circuits and a non-transitory computer-readable medium comprising instructions stored therein, which when executed by the one or more processor circuits, cause the one or more processor circuits to perform operations. The operations include determining contents of an active application window displayed on a primary computing device, the primary computing device being associated with a user account. The operations further include determining one or more candidate computing devices associated with the user account and obtaining location information for the one or more candidate computing devices. The operations further include selecting one of the one or more computing devices determined to be proximate to the primary computing device based on the obtained location information as a secondary computing device and selecting one or more supplemental items related to the determined contents of the active application window. The operations further include providing the selected one or more supplemental items for display on the secondary computing device while the active application window is displayed on the primary computing device.

Aspects of the subject technology also relate to non-transitory machine-readable medium comprising instructions stored therein, which when executed by a machine, cause the machine to perform operations. The operations include determining contents inputted by a user in an active application window displayed on a primary computing device, the primary computing device being associated with a user account. The operations further include identifying a secondary computing device associated with the user account and located proximate to the primary computing device and selecting one or more supplemental items related to the determined contents of the active application window. The operations further include providing the selected one or more supplemental items for display on the secondary computing device while the active application window is displayed on the primary computing device.

It is understood that other configurations of the subject technology will become readily apparent to those skilled in the art from the following detailed description, where various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

The accompanying drawings, which are included to provide further understanding and are incorporated in and constitute a part of this specification, illustrate disclosed aspects and together with the description serve to explain the principles of the disclosed aspects.
**FIG. 1** illustrates an example network environment in accordance with various aspects of the subject technology.
**FIG. 2** shows a flowchart illustrating an example process in accordance with various aspects of the subject technology.
**FIG. 3** shows a flowchart illustrating an example process in accordance with various aspects of the subject technology.
**FIG. 4** shows an example first interface and second interface in accordance with various aspects of the subject technology.
**FIG. 5** shows an example first interface and second interface in accordance with various aspects of the subject technology.
**FIG. 6** shows an example first interface and second interface in accordance with various aspects of the subject technology.
**FIG. 7** conceptually illustrates an example electronic system with which some implementations of the subject technology can be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced without these specific details. In some instances, structures and components are shown in block diagram form in order to avoid obscuring the concepts of the subject technology.

The subject technology supplements the contents of an active application window displayed on a primary computing device with supplemental items provided for display on a secondary computing device. As further explained below, the contents of the active application window may include media content, text, web content, user interface elements, etc. either generated by the active application, for example, or inputted by a user using the primary computing device. The supplemental items are provided to supplement the contents of the application window by providing additional content, information, user interface elements, etc. to expand the user's interaction with the active application using the secondary computing device. The supplemental items may be related to the contents of the active application window displayed on the primary computing device, for example, based on the active application generating the active application window, or based on the subject matter of the contents displayed in the active application window.

According to various aspects, the primary and secondary computing devices are associated with a user account. The user account may be an online or cloud based user account that is used to access various web services and applications, such as email, social networks, operating systems, web applications (i.e., text editor, spreadsheet application, presentation application), among others. Access to the web services and applications may be granted through authentication of user account credentials. User authentication may be initiated by signing into the user account through, for example, a web portal, a web application, application log-in page, among others.

In one or more implementations, the subject technology may determine contents of an active application window displayed on a primary computing device associated with a user account. A secondary computing device associated with the user account and located proximate to the primary computing device may be identified. One or more supplemental items related to the determined contents of the active application window may be selected and provided for display on the secondary computing device while the active application window is displayed on the primary computing device.

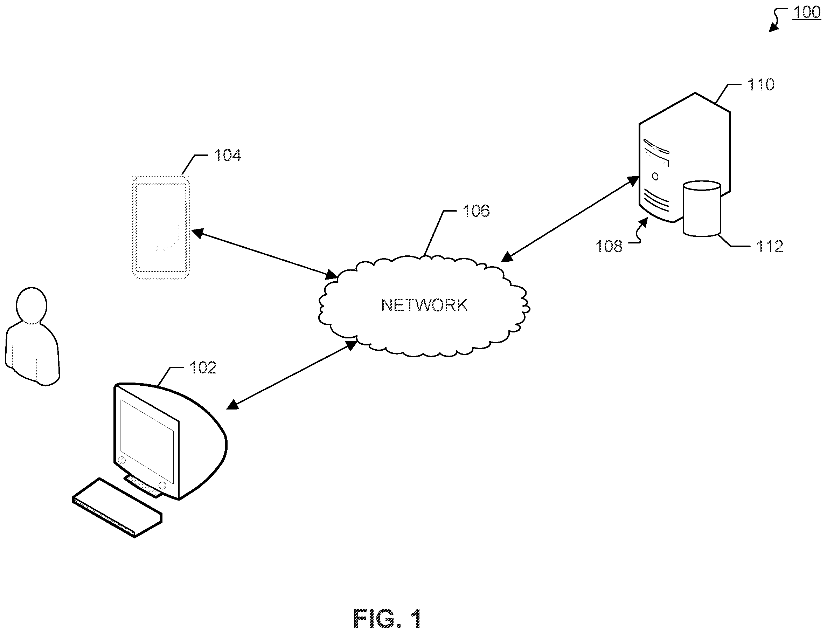

**FIG. 1** illustrates an example network environment 100 in which a secondary computing device may be utilized to provide supplemental items related to contents of an active application window being displayed on a primary computing device. The network environment 100 includes primary computing device 102, secondary computing device 104, and server 108. Primary computing device 102, secondary computing device 104 and server 108 can communicate with each other through a network 106. Server 108 can include one or more computing devices 110 and data store 112.

Primary computing device 102 and secondary computing device 104 may be systems or devices having processor circuits, memory, and communication capabilities for exchanging data with other computing devices, including for example, server 108. In some aspects, primary computing device 102 and secondary computing device 104 may have capabilities to display information, content and various items, and to receive user input on the respective computing device. By way of example and not of limitation, processing devices can include a desktop computer, a laptop computer, a handheld computer, a personal digital assistant (PDA), a cellular telephone, a network appliance, a camera, a smart phone, an enhanced general packet radio service (EGPRS) mobile phone, a media player, a navigation device, an email device, a game console, or a combination of any of these data processing devices or other data processing devices.

The server 108 may be any system or device having processor circuits, memory, and communications capabilities for exchanging data with other computing devices, including for example, the primary computing device 102 and the secondary computing device 104. The server 108 may utilize credential information associated with an online or cloud based user account to provide access to various web services or applications associated with the user account or other resources. In some example aspects, the server 108 can include a single computing device (e.g., computing device 110). In other implementations, the server 108 can represent more than one computing device working together to perform the actions of a computer server (e.g., server farm). Further, the server 108 can represent various forms of servers including, but not limited to, a web server, an application server, a proxy server, a network server, or a server farm.

In some aspects, the server 108 is configured to execute computer instructions to supplement the contents of an active application window on a primary computing device 102 with supplemental items related to the contents and provided for display on a secondary computing device 104. While a user is utilizing the primary computing device 102, the server 108 may determine the contents of the active application window displayed on the primary computing device 102, and select supplemental items based on the determined contents of the active application window. In one or more implementations, the server 108 may locate a second computing device 104 associated with the user account and determine that the secondary computing device 104 is located proximate to (e.g., within a threshold distance of) the primary computing device 102. The server 108 may provide the selected supplemental items for display on the secondary computing device 104.

In some aspects, the computing devices, including primary computing device 102, secondary computing device 104 and computing device 110, may communicate wirelessly through a communication interface (not shown), which may include digital signal processing circuitry where necessary. The communication interface may provide for communications under various modes or protocols, for example, Global System for Mobile communication (GSM) voice calls, Short Message Service (SMS), Enhanced Messaging Service (EMS) or Multimedia Messaging Service (MMS) messaging, Code Division Multiple Access (CDMA), Time Division Multiple Access (TDMA), Personal Digital Cellular (PDC), Wideband Code Division Multiple Access (WCDMA), CDMA2000, or General Packet Radio System (GPRS), among others. For example, the communication may occur through a radio-frequency transceiver (not shown). In addition, short-range communication may occur, for example, using a Bluetooth, Near Field Communication (NFC), WiFi, or other such transceiver.

In some aspects, network environment 100 can be a distributed client/server system that spans one or more networks such as, for example, network 106. Network 106 can be a large computer network such as, for example, a local area network (LAN), wide area network (WAN), the Internet, a cellular network, or a combination thereof connecting any number of mobile clients, fixed clients, and servers. Further, the network 106 can include, but is not limited to, any one or more of the following network topologies, including a bus network, a star network, a ring network, a mesh network, a star-bus network, tree or hierarchical network, and the like. In some aspects, communication between each client (e.g., primary computing device 102 and secondary computing device 104) and server (e.g., server 108) can occur via a virtual private network (VPN), Secure Shell (SSH) tunnel, or other secure network connection. In some aspects, network 106 may further include a corporate network (e.g., intranet) and one or more wireless access points.

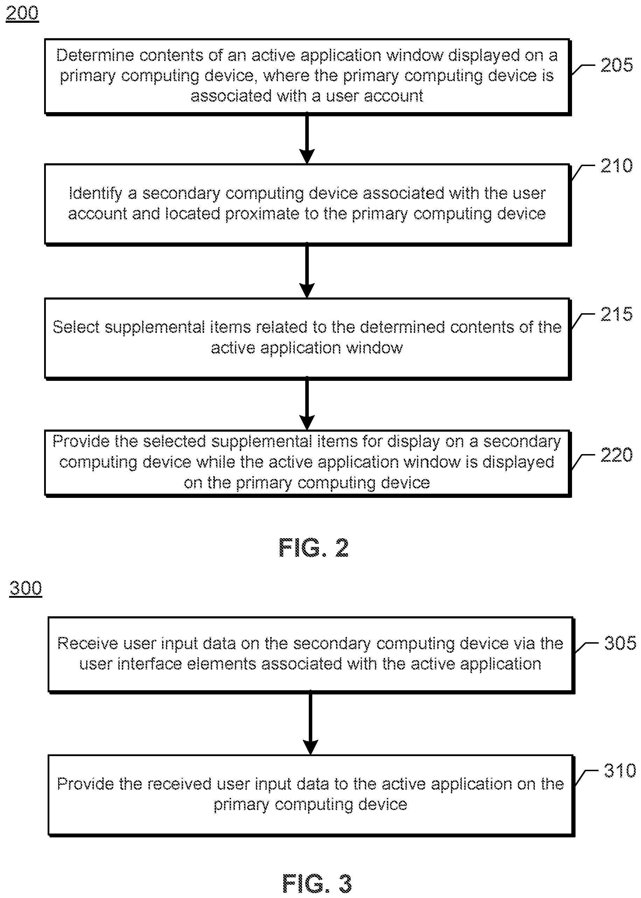

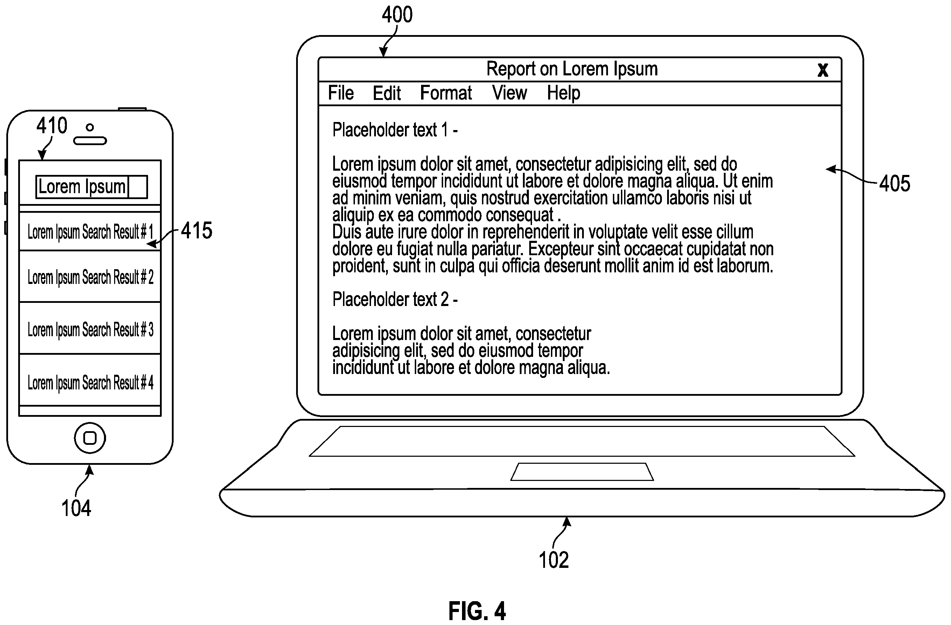

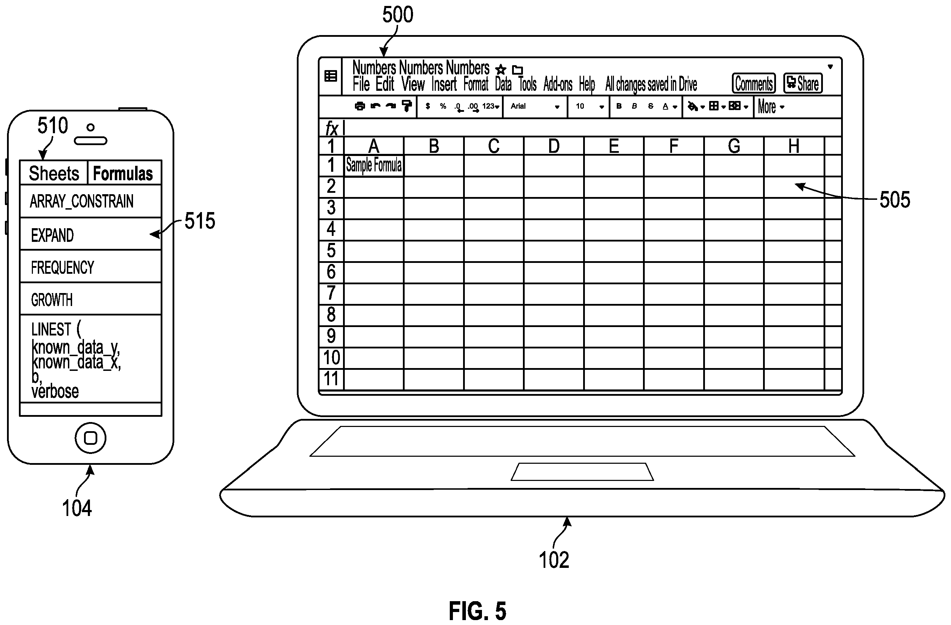

**FIG. 2** shows a flowchart illustrating an example process 200 for providing supplemental items for display on a secondary computing device, in accordance with various aspects of the subject technology. The steps of the process 200 do not need to be performed in the order shown. It is understood that the depicted order is an illustration of one or more example approaches, and the subject technology is not meant to be limited to the specific order or hierarchy presented. The steps can be rearranged, and /or two or more of the steps can be performed simultaneously. **FIG. 2** will be discussed with reference to **FIG. 4** and **FIG. 5****.**

In block 205 of **FIG. 2**, the contents of an active application window displayed on primary computing device 102 are determined by server 108, where the primary computing device 102 is associated with a user account. The contents of the active application window may include text, media content, web content, user interface elements, or any other information that may be displayed in the active application window on the primary computing device 102 during operation. For example, a user may be working in a cloud-based text editor or a text editor installed on the primary computing device 102 that may allow the user to view and edit text documents. The primary computing device 102 may display an active application window associated with the text editor that may include user interface elements associated with the text editor and/or text inputted by the user. The contents of the active application window may include user interface elements for interacting with the text editor (e.g., elements for opening or closing the text editor, elements for editing or formatting text, etc.). Inputs from the user may include characters entered into the text editor by the user, and may correspond to, for example, a title of a text document, the content of the text document, formatting of the text document, among others.

In some aspects, the user may be using a cloud-based spreadsheet application or a spreadsheet application installed on the primary computing device 102. The primary computing device 102 may display an active application window that includes user interface elements associated with the spreadsheet application and/or inputs entered by the user. The contents of the active application window may include user interface elements for interacting with the spreadsheet application (e.g., elements for opening or closing the spreadsheet application, formulas available to the user, etc.). Inputs from the user may include one or more characters entered into the spreadsheet application by the user, and may correspond to, for example, title of the spreadsheet, formulas, cell contents, among others.

According to aspects of the subject technology, the active application window displayed on the primary computing device 102 may be associated with web services or applications, such as email applications, web browsers, social networks, among others. The contents of the active application window may include user interface elements associated with the web services and applications such as, user interface elements for navigating within web browsers, user interface elements for preparing, sending and reading email, etc. Inputs from the user may include characters or commands entered into the browser or email application, and may correspond to, for example, search terms, navigation commands, email content, among others.

As previously described, the user account may be a cloud-based user account that is used to access various web services. As an example, a user may log into the cloud-based user account on the primary computing device 102, which enables the server 108 to interact with primary computing device 102. The user may log into the cloud-based user account through, for example, an online portal or an operating system's sign-in process. After the user logs into the user account, the user may utilize the primary computing device 102 by executing one or more applications on the primary computing device 102, which may display any of the contents of the active application windows mentioned previously.

In one or more implementations, the active application window displayed on the primary computing device 102 may be associated with a web application. As discussed above, the credentials associated with the cloud-based user account may be used to access the web application. As an example, the user may be running a web browser on the primary computing device 102 to view and interact with the web application. The web application may be hosted by the server 108 or a separate server. The server 108 may determine the contents of the active application window displayed on the primary computing device 102 by accessing, periodically, the server hosting the web application. Alternatively, the server hosting the web application may update the server 108 whenever the user interacts with the web application or after a predetermined number of user inputs are received.

In some aspects, the active application window displayed on the primary computing device 102 may be associated with an application installed locally on the primary computing device 102. An application running on the primary computing device 102 may be considered an active application when a window associated with the application is visible on a screen associated with the primary computing device 102 and is the window with which a user can interact or the window in focus on the display of primary computing device 102. The active application may communicate some or all of the contents of the active application window to the server 108 via an application programming interface. The server 108 may determine the contents of the active application window displayed on the primary computing device 102 by receiving, via the application programming interface, contents of the active application window associated with the active application. The active application may communicate the contents of the active application window periodically. Alternatively, the active application may update the server 108 whenever the user interacts with the active application or after a predetermined number of user inputs are received.

According to aspects of the subject technology, primary computing device 102 may take a screen capture of an active application window displayed on the primary computing device 102, or a part of the display of the primary computing device 102 to obtain bitmap data associated with the active application window displayed on the primary computing device 102. The server 108 may determine the contents of the active application window displayed on the primary computing device 102 by receiving bitmap data of the active application window displayed on the primary computing device 102. The server 108 may process the received bitmap data using optical character recognition, for example, to determine the contents of the active application window displayed on the primary computing device 102. In some cases, the user may be using an application on the primary computing device 102 that may not communicate information to the server 108. If the server 108 does not receive information from the active application on the primary computing device 102 and is unable to access the contents of the active application window from a server hosting a web application, the server 108 may request bitmap data from the operating system on the primary computing device 102. The operating system on the primary computing device 102 may send the requested bit map data to the server 108, and the server 108 may process the bitmap data into user readable text through optical character recognition.

It is understood that the bit map data of the displayed active application window is provided by way of example and not of limitation, and that other types of data may be received. For example, the operating system or an application running in the background on the primary computing device 102 may process the active application window displayed on the primary computing device 102 and send the processed data to the server 108.

The server 108 may further determine user-indicated contents among the contents of the active application window displayed on the primary computing device 102. User-indicated contents may be any contents associated with interaction between a user and the active application window displayed on the primary computing device 102. For example, user-indicated contents may be new character inputs, selection of links, displayed information closest to the cursor, among others. The server 108 may access, periodically, the active application window displayed on the primary computing device 102, and determine the user-indicated contents. The user-indicated contents may be used by the server 108 to anticipate supplemental items that the user may be interested in and provide the supplemental items for display on the secondary computing device 104. As an example, the user may be typing a report on a cloud-based text editor. As the user types the report, changes in the text editor associated with new user inputs may be accessed by the server 108, and the changes may be used to obtain supplemental items related to the changes in the text editor. In some aspects, the server 108 may access user activity on the Internet. As an example, the user may select a link in a webpage displayed in a browser running on the primary computing device 102 to navigate to a new webpage. The server 108 may access key terms associated with the new webpage or key terms in the new webpage and obtain supplemental items related to the key terms. The server 108 may provide the selected supplemental items related to the key terms to be displayed on the secondary computing device 104. In some aspects, the server 108 may receive a location of a cursor displayed on the primary computing device 102 and determine user-indicated contents based on the location of the cursor. The server 108 may determine that contents displayed in the active application window on the primary computing device 102 that are within a predetermined distance from the location of the cursor as the user-indicated contents. The subject technology is not limited to these examples of determining user-indicated contents.

In block 210, a secondary computing device associated with the user account and located proximate to primary computing device 102 is identified. A user may have multiple computing devices that have been used by the user to log in and access applications and services under a single user account. Server 108 may maintain a list of computing devices that the user has used to log into the user account. The list may be indexed using identifiers for the respective computing devices, such as MAC addresses, IP addresses, device identifiers, etc. The list may be ordered by most recently used by the user.

The subject technology provides supplement items for display on a secondary computing device to supplement and expand the user's experience with an active application window on a primary computing device. Accordingly, proximity to the primary computing device is a factor in identifying one of the computing devices associated with the user account as the secondary computing device for use in the subject technology. In some implementations, locations of the computing devices relative to a location of the primary computing device 102 are determined. The server 108 may request location information, such as GPS coordinates, from primary computing device 102 and the other computing devices associated with the user account. Alternatively, primary computing device 102 and/or the other computing devices may report their respective location information to server 108, or another server accessible to server 108, at various intervals. The location information is not limited to GPS coordinates. For example, the location information may be based on cellular network tower triangulation, Wi-Fi network identifiers and locations, etc.

The server 108 may rank the other computing devices based on being located within a threshold distance of the primary computing device 102. In some cases, the server 108 may be able to determine only the location of the primary computing device 102, because one or more of the other computing devices may lack, for example, GPS capabilities. The server 108 may cause the primary computing device 102 to determine the relative location of any other computing devices through the use of short-range communication technologies such as, for example, Bluetooth, or Near Field Communication (NFC). The server 108 may determine that the other computing devices are located within a threshold distance of the primary computing device 102 based on data received from the primary computing device 102 in response to the short-range communications with the other computing devices.

The server 108 may select one of the other computing devices that is within a threshold distance of the primary computing device 102. In some aspects, the threshold distance may be predefined, for example, 5 feet, 10 feet, among others. The threshold distance may be defined such that the server 108 selects a computing device that is accessible to the user of the primary computing device 102 If multiple computing devices are determined to be within the threshold distance, then the server 108 may select one of the computing devices based on current charge level, whether the user is currently logged into the user account on the computing device, screen size, average time of user usage for each of the second plurality of computing devices, etc.

In block 215 of **FIG. 2**, supplemental items related to the determined contents of the active application window displayed on primary computing device 102 are selected. The supplemental items may be any items related to the determined contents of the active application window displayed on primary computing device 102. The supplemental items are intended to supplement the contents of the active application window displayed on the primary computing device 102 and may include, for example, search results of a search query based on the determined contents of the active application window displayed on the primary computing device 102, historical information related to the user's use of the active application generating the active application window, web-based or locally stored answers to questions derived from the determined contents, social graph information related to contacts identified in the determined contents, among others. As an example, when a user is typing a report on a text editor, the supplemental items may comprise one or more search results of a search query based on the text contents of the active application window of the text editor displayed on the primary computing device 102. The search query may be based on a portion of the text contents displayed in the active application window, for example, the title of the report, most frequently or most recently used word or phrase in the report, among others. In some cases, predictive searching methods may be used to refine the search results. The search results may be refined by using a search query of one or more autocomplete suggestions based on the portion of the determined contents. Autocomplete suggestions may be based on, for example, search history associated with the user account, popularity of search terms, among others.

In some implementations, the supplemental items may include user interface elements to extend the user interface of an active application running on the primary computing device 102. For example, the user interface elements, or instructions identifying the user interface elements, may be provided by the text editor on the primary computing device 102 to the server 108. The server 108 may provide the user interface elements for display on the secondary computing device 104. The user interface elements may be displayed on the secondary computing device 104.

**FIG. 4** shows an example of the contents of an active application window displayed on the primary computing device 102 and supplemental items displayed on the secondary computing device 104. More specifically, **FIG. 4** shows active application window 405 as displayed on a first screen 400 of a primary computing device 102 and supplemental items 415 as displayed on a second screen 410 of a secondary computing device 104. As shown, the first screen 400 is displaying active application window 405, which comprises content such as user input information and user interface elements associated with a text editor. The server 108 may determine the contents of the active application window displayed on the primary computing device 102 based on the methods described above, and may obtain supplemental items by executing a search query on a portion of the contents of the active application window displayed on the primary computing device 102. The server may select a portion of the contents of the active application window displayed on the primary computing device 102 such as the title of the report, and execute a search query based on the title of the report. The server 108 may send a search result based on the search query as a supplemental item to the secondary computing device 104 for display. The server may send a link to the search result, a snippet of the search result, etc. The second screen 410 and the supplemental items 415 provide an example of the secondary computing device 104 displaying search results, in accordance with various aspects of the subject technology. In some aspects, the server 108 may select a portion of the contents of the active application window displayed on the primary computing device 102 based on the frequency of use in the report. Alternatively, the server may select the newest contents displayed in the active application window on the primary computing device 102. The selected portion of the contents may be used to obtain supplemental items and the supplemental items may be transmitted to the secondary computing device 104 for display.

In one or more implementations, the server 108 may obtain supplemental items related to the determined contents based on historical activity of the user with the active application. As an example, the user may be working with formulas in a spreadsheet application on the primary computing device 102. **FIG. 5** shows an example of an active application window displayed on the primary computing device 102 and supplemental items, in the form of user interface elements, displayed on the secondary computing device 104. More specifically, **FIG. 5** shows an active application window 505 as displayed on a first screen 500 of a primary computing device 102 and supplemental items in the form of user interface elements 515 as displayed on a second screen 510 of a secondary computing device 104. As shown, the first screen 500 is displaying active application window 505, which comprises contents including user input information and user interface elements associated with a spreadsheet application. If the spreadsheet application is a web application, then the server 108 may select one or more supplemental items by accessing most frequently-used formulas from the server hosting the web application. If the spreadsheet application is a local application running on the primary computing device 102, then the spreadsheet application may send the most frequently-used formulas to the server 108 via an application programming interface. Second screen 510 and user interface elements 515 provide an example of supplemental items provided for display on the secondary computing device 104, where the supplemental items include the frequently-used formulas, in accordance with various aspects of the subject technology. In some aspects, the spreadsheet application on the primary computing device 102 may send instructions to specify what to display on the secondary computing device 104. As mentioned previously, instructions may specify user interface elements or most frequently-used formulas.

In one or more implementations, the server 108 may select supplemental items related to the determined contents of the active application window by using at least a portion of the contents as an input for an application running either on the server 108 or the secondary computing device 104. As an example, one or more terms from the contents may be selected as described above. The one or more terms may be used as inputs on a dictionary application running on the server 108, and the server 108 may provide the definitions produced by the dictionary application for the one or more terms to secondary computing device 104 as supplemental items for display. Alternatively, selecting the supplemental items may include receiving information regarding the available applications on the secondary computing device 104. If a dictionary application is available on the secondary computing device 104, the server 108 may provide, via an application programming interface, the selected one or more terms to the secondary computing device 104 to be used as inputs for the dictionary application.

In block 220 of **FIG. 2**, the selected supplemental items are provided for display on the secondary computing device, where the secondary computing device is associated with the user account. As an example, the user may have previously registered the secondary computing device 104 with the user account or logged into the user account on the secondary computing device 104, which enables the server 108 to interact with the secondary computing device 104. In some aspects, the secondary device 104 may display selected supplemental items, such as the search results of a search query or the most frequently-used formulas, while the active application window is displayed on primary computing device 102. Since the supplemental items are intended to supplement and expand the user's experience with the contents of the active application window displayed on the primary computing device 102, when the active application window is closed and the application terminated, the supplemental items may no longer be displayed on the secondary computing device 104.

The supplemental items provided to the secondary computing device 104 may be displayed in an application installed on the secondary computing device 104 and configured to communicate with server 108 to support the subject technology. The application may be a version of the active application executing on the primary computing device 102 compatible with the secondary computing device 104. The application may be specifically designed to communicate and receive the supplemental items from the server 108 and be compatible with a variety of different applications that may be executed on the primary computing device 102.

**FIG. 3** shows a flowchart illustrating an example process 300 for allowing a user to interact with an active application running on the primary computing device 102 through the secondary computing device 104, in accordance with various aspects of the subject technology. The steps of the process 300 do not need to be performed in the order shown. It is understood that the depicted order is an illustration of one or more example approaches, and the subject technology is not meant to be limited to the specific order or hierarchy presented. The steps can be rearranged, and/or two or more of the steps can be performed simultaneously.

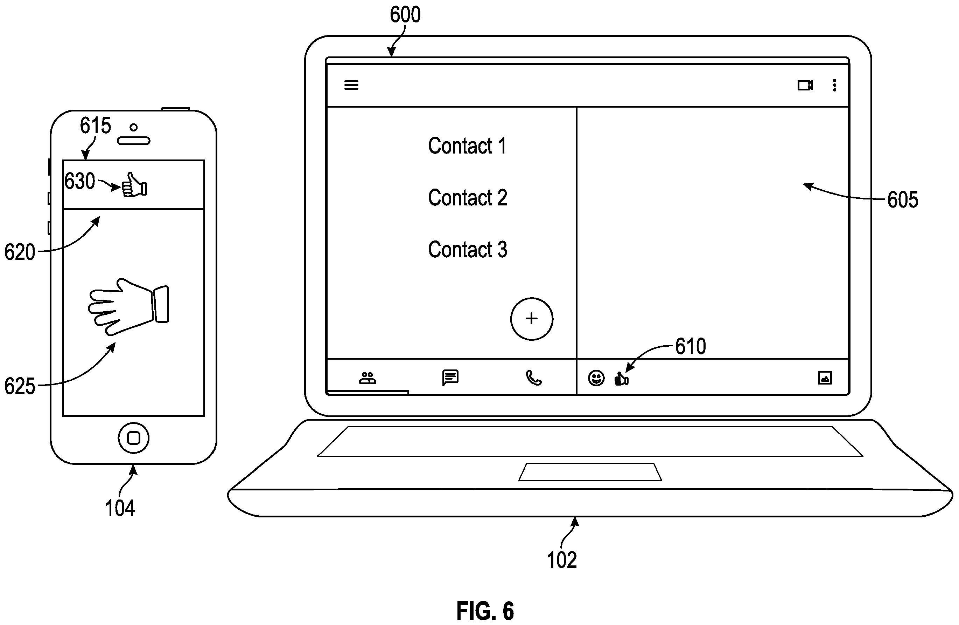

**FIG. 3** will be discussed with reference to **FIG. 6. FIG. 6** shows an example of active application window displayed on the primary computing device 102 and supplemental items as displayed on the secondary computing device 104. More specifically, **FIG. 6** shows active application window 605 with user interface element 610 as contents of the active application window displayed on a first screen 600 of a primary computing device 102. Second user interface 620 includes user interface element 630 as a selected supplemental item and user input 625 as displayed on a second screen 615 of secondary computing device 104.

For explanatory purposes, process 300 may be performed after process 200. As mentioned previously, active application window displayed on the primary computing device 102 may be associated with the active application running on the primary computing device 102 and the supplemental items provided by the server 108 to the secondary computing device 104 may include user interface elements associated with the active application.

In block 305 of **FIG. 3**, supplemental items in the form of user interface elements are displayed on secondary computing device 104. User input is received by the secondary computing device 104, and the secondary computing device 104 may send user input data associated with user input to the server 108. The server 108 may receive the user input data from the secondary computing device 104 and provide the user input data to the primary computing device 102. As an example, the user may open a chatting application on the primary computing device 102, which may display the associated active application window 605 on the first screen 600. The server 108 may determine that the contents of the active application window displayed on the primary computing device 102 are the chatting application, and obtain supplemental items related to the chatting application. The supplemental items may include, for example, user interface elements, or instructions identifying user interface elements, to extend the user interface of the chatting application to the second computing device, instructions to open a mobile chatting application on the secondary computing device, among others. The server 108 may provide the selected supplemental items to be displayed on the secondary computing device 104. The second user interface 620 is an example of supplemental items displayed by the secondary computing 104. The second user interface 620 may be associated with a mobile chatting application in the secondary computing device 104. The mobile chatting application may be opened and the user interface element 620 may be displayed. The user interface element 620 may allow the user to draw an emoticon as user input 625 on the secondary computing device 104. In response to receiving and recognizing the user input 625, the mobile chatting application may display user interface element 630, which shows an emoticon that is most similar to the user input 625. The mobile chatting application may send the user input data associated with the received user input 625 to the server 108 via an application programming interface.

In block 310 of **FIG. 3**, the user input data is provided to the primary computing device 102. The server 108 may send user input data to the primary computing device 102 as an input to the active application, and the primary computing device 102 may display the user input data as seen with user interface element 610. In some aspects, a new application associated with the user input data may be opened in the primary computing device 102 and the user input data may be used as an input to the new application.

In situations in which the systems discussed here collect personal information about users, or may make use of personal information, the users may be provided with an opportunity to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

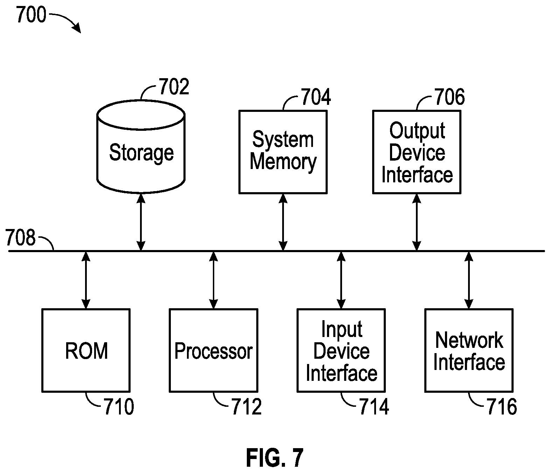

**FIG. 7** conceptually illustrates an example electronic system with which some implementations of the subject technology can be implemented. Electronic system 700 can be a computer, phone, PDA, or any other sort of electronic device. Such an electronic system includes various types of computer readable media and interfaces for various other types of computer readable media. Electronic system 700 includes a bus 708, processor(s) 712, system memory 704, read-only memory (ROM) 710, permanent storage device 702, input device interface 714, output device interface 706, and network interface 716.

Bus 708 collectively represents system, peripheral, and chipset buses that communicatively connect the numerous internal devices of electronic system 700. For instance, bus 708 communicatively connects processor(s) 712 with ROM 710, system memory 704, and permanent storage device 702.

From these various memory units, processor(s) 712 retrieves instructions to execute and data to process in order to execute the processes of the subject disclosure. The processing unit(s) can be a single processor or a multi-core processor in different implementations. Processor(s) 712 represent one or more processor circuits that may include various logic gates, registers, and other circuitry used to load and execute sequences of instructions. The processor circuits may be general integrated circuit processors, or application specific integrated circuit (ASIC) processors, for example.

ROM 710 stores static data and instructions that are needed by processing unit(s) 712 and other modules of the electronic system. Permanent storage device 702, on the other hand, is a read-and-write memory device. This device is a non-volatile memory unit that stores instructions and data even when electronic system 700 is off. Some implementations of the subject disclosure use a mass-storage device (for example, a magnetic or optical disk and its corresponding disk drive) as permanent storage device 702.

Other implementations use a removable storage device (for example, a floppy disk, flash drive, and its corresponding disk drive) as permanent storage device 702. Like permanent storage device 702, system memory 704 is a read-and-write memory device. However, unlike storage device 702, system memory 704 is a volatile read-and-write memory, such as a random access memory. System memory 704 stores some of the instructions and data that the processor needs at runtime. In some implementations, the processes of the subject disclosure are stored in system memory 704, permanent storage device 702, or ROM 710. For example, the various memory units include instructions for displaying web pages, processing user entries to the web pages, and generating URLs, in accordance with some implementations. From these various memory units, processing unit(s) 712 retrieves instructions to execute and data to process in order to execute the processes of some implementations.

Bus 708 also connects to input and output device interfaces 714 and 706. Input device interface 714 enables the user to communicate information and select commands to the electronic system. Input devices used with input device interface 714 include, for example, alphanumeric keyboards and pointing devices (also called "cursor control devices"). Output device interfaces 706 enables, for example, the display of images generated by the electronic system 700. Output devices used with output device interface 706 include, for example, printers and display devices, for example, cathode ray tubes (CRT) or liquid crystal displays (LCD). Some implementations include devices, for example, a touchscreen that functions as both input and output devices.

Finally, as shown in **FIG. 7**, bus 708 also couples electronic system 700 to a network (not shown) through a network interface 716. In this manner, the computer can be a part of a network of computers (for example, a local area network (LAN), a wide area network (WAN), or an Intranet, or a network of networks, for example, the Internet. Any or all components of electronic system 700 can be used in conjunction with the subject disclosure.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware, or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage, and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray® discs, ultra density optical discs, any other optical or magnetic media, and floppy disks. The computer-readable media can store a computer program that is executable by at least one processing unit and includes sets of instructions for performing various operations. Examples of computer programs or computer code include machine code, for example, is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

## Claims

1. A computer-implemented method, comprising:
determining contents of an active application window (405) displayed on a primary computing device (102), the primary computing device being associated with a user account, wherein the contents of the active application window displayed on the primary computing device include text inputted by a user using the primary computing device;
identifying a secondary computing device (104) associated with the user account and located proximate to the primary computing device;
selecting one or more search results (415) from an executed search query that is based on the text inputted by the user and displayed in the active application window; and
providing the selected one or more search results for display on the secondary computing device while the active application window is displayed on the primary computing device.

2. The computer-implemented method of claim 1, wherein determining the contents of the active application window displayed on the primary computing device comprises:
receiving bitmap data of the active application window displayed on the primary computing device; and
processing the received bitmap data using optical character recognition to determine the contents of the active application window.

3. The computer-implemented method of claim 1, wherein determining the contents of the active application window displayed on the primary computing device comprises:
receiving, via an application programming interface, the contents of the active application window displayed on the primary computing device from an active application on the primary computing device.

4. The computer-implemented method of claim 1, wherein the active application window displayed on the primary computing device is generated by a web application hosted by a server (108), and wherein determining the contents of the active application window displayed on the primary computing device comprises:
accessing the contents of the active application window from the server hosting the web application.

5. The computer-implemented method of claim 1, wherein the search query is based on a title of the content displayed in the active application window.

6. The computer-implemented method of claim 1, wherein the search query is selected from the displayed content based on how recently a word or phrase was inputted into the content.

7. The computer-implemented method of claim 1, wherein the search query is selected from the displayed content based on how frequently a word or phrase is present in the content.

8. The computer-implemented method of claim 1, wherein identifying the secondary computing device comprises:
determining one or more candidate computing devices associated with the user account;
obtaining location information for the one or more candidate computing devices; and
selecting one of the one or more candidate computing devices as the secondary computing device based on the obtained location information.

9. The computer-implemented method of claim 1, wherein the text is inputted by the user via one of: a speech input from the user, a tactile input from the user, a keyboard, and a touchscreen.

10. A system (700), comprising:
one or more processor circuits (712); and
a non-transitory computer-readable medium (702, 704, 710) comprising instructions stored therein, which when executed by the one or more processor circuits, cause the one or more processor circuits to perform operations comprising:
determining contents of an active application window (405) displayed on a primary computing device (102), the primary computing device being associated with a user account, wherein the contents of the active application window displayed on the primary computing device include text inputted by a user using the primary computing device;
determining one or more candidate computing devices associated with the user account;
obtaining location information for the one or more candidate computing devices;
selecting one of the one or more computing devices determined to be proximate to the primary computing device based on the obtained location information as a secondary computing device (104);
selecting one or more search results (415) from an executed search query that is based on the text inputted by the user and displayed in the active application window; and
providing the selected one or more search results for display on the secondary computing device while the active application window is displayed on the primary computing device.

11. The system of claim 10, wherein the operations for determining the contents of the active application window displayed on the primary computing device comprise:
receiving, via an application programming interface, the contents of the active application window displayed on the primary computing device from an active application on the primary computing device.

12. The system of claim 11, wherein the active application window displayed on the primary computing device is generated by a web application hosted by a server, and wherein the operations for determining the contents of the active application window displayed on the primary computing device comprise:
accessing the contents of the active application window from the server hosting the web application.

13. A non-transitory machine-readable medium comprising instructions stored therein, which when executed by a machine, cause the machine to perform operations comprising:
determining contents inputted by a user in an active application window (405) displayed on a primary computing device (102), the primary computing device being associated with a user account, wherein the contents of the active application window displayed on the primary computing device include text inputted by a user using the primary computing device;
identifying a secondary computing device (104) associated with the user account and located proximate to the primary computing device;
selecting one or more search results (415) from an executed search query that is based on the text inputted by the user and displayed in the active application window; and
providing the selected one or more search results for display on the secondary computing device while the active application window is displayed on the primary computing device.

14. The non-transitory machine-readable medium of claim 13, wherein the operations for determining the contents inputted by the user in the active application window displayed on the primary computing device comprise:
receiving, via an application programming interface, the contents inputted by the user in the active application window displayed on the primary computing device from an active application on the primary computing device.

15. The non-transitory machine -readable medium of claim 13, wherein the active application window displayed on the primary computing device is generated by a web application hosted by a server, and wherein the operations for determining the contents inputted by the user in the active application window displayed on the primary computing device comprise:
accessing the contents of the active application window from the server hosting the web application.

## Patentansprüche

1. Computerimplementiertes Verfahren, umfassend:
Ermitteln von Inhalten eines aktiven Anwendungsfensters (405), das auf einem primären Computergerät (102) angezeigt wird, wobei das primäre Computergerät mit einem Benutzerkonto assoziiert ist, wobei die Inhalte des aktiven Anwendungsfensters, das auf dem primären Computergerät angezeigt wird, Text beinhalten, der durch einen Benutzer unter Nutzung des primären Computergeräts eingegeben wird;
Identifizieren eines sekundären Computergeräts (104), das mit dem Benutzerkonto assoziiert ist und sich in der Nähe des primären Computergeräts befindet;
Auswählen eines oder mehrerer Suchergebnisse (415) aus einer ausgeführten Suchanfrage, die auf dem vom Benutzer eingegebenen Text basiert und in dem aktiven Anwendungsfenster angezeigt wird; und
Bereitstellen des einen oder der mehreren ausgewählten Suchergebnisse zur Anzeige auf dem sekundären Computergerät, während das aktive Anwendungsfenster auf dem primären Computergerät angezeigt wird.

2. Computerimplementiertes Verfahren nach Anspruch 1, wobei das Ermitteln der Inhalte des aktiven Anwendungsfensters, das auf dem primären Computergerät angezeigt wird, umfasst:
Empfangen von Bitmap-Daten des aktiven Anwendungsfensters, das auf dem primären Computergerät angezeigt wird; und
Verarbeiten der empfangenen Bitmap-Daten unter Nutzung optischer Zeichenerkennung, um die Inhalte des aktiven Anwendungsfensters zu ermitteln.

3. Computerimplementiertes Verfahren nach Anspruch 1, wobei das Ermitteln der Inhalte des aktiven Anwendungsfensters, das auf dem primären Computergerät angezeigt wird, umfasst:
Empfangen, über eine Anwendungsprogrammierschnittstelle, der Inhalte des aktiven Anwendungsfensters, das auf dem primären Computergerät angezeigt wird, von einer aktiven Anwendung auf dem primären Computergerät.

4. Computerimplementiertes Verfahren nach Anspruch 1, wobei das aktive Anwendungsfenster, das auf dem primären Computergerät angezeigt wird, durch eine Web-Anwendung erzeugt wird, die von einem Server (108) gehostet wird, und wobei das Ermitteln der Inhalte des aktiven Anwendungsfensters, das auf dem primären Computergerät angezeigt wird, umfasst:
Zugreifen auf die Inhalte des aktiven Anwendungsfensters von dem Server, der die Web-Anwendung hostet.

5. Computerimplementiertes Verfahren nach Anspruch 1, wobei die Suchanfrage auf einem Titel der Inhalte basiert, die in dem aktiven Anwendungsfenster angezeigt werden.

6. Computerimplementiertes Verfahren nach Anspruch 1, wobei die Suchanfrage basierend darauf, wann ein Wort oder eine Wortverbindung zuletzt in die Inhalte eingegeben wurde, aus den angezeigten Inhalten ausgewählt wird.

7. Computerimplementiertes Verfahren nach Anspruch 1, wobei die Suchanfrage basierend darauf, wie häufig ein Wort oder eine Wortverbindung in den Inhalten vorhanden ist, aus den angezeigten Inhalten ausgewählt wird.

8. Computerimplementiertes Verfahren nach Anspruch 1, wobei das Identifizieren des sekundären Computergeräts umfasst:
Ermitteln eines oder mehrerer Kandidatencomputergeräte, die mit dem Benutzerkonto assoziiert sind;
Erhalten von Standortinformationen für das eine oder die mehreren Kandidatencomputergeräte; und
Auswählen eines von dem einen oder den mehreren Kandidatencomputergeräten als das sekundäre Computergerät basierend auf den erhaltenen Standortinformationen.

9. Computerimplementiertes Verfahren nach Anspruch 1, wobei der Text durch den Benutzer eingegeben wird aus: einer Spracheingabe von dem Benutzer, einer Berührungseingabe von dem Benutzer, einer Tastatur und einem Berührungsbildschirm.

10. System (700), umfassend:
eine oder mehrere Prozessorschaltungen (712); und
ein nichtflüchtiges computerlesbares Medium (702, 704, 710), das darauf gespeicherte Anweisungen umfasst, die, wenn sie durch die eine oder die mehreren Prozessorschaltungen ausgeführt werden, die eine oder die mehreren Prozessorschaltungen veranlassen, Operationen durchzuführen, umfassend:
Ermitteln von Inhalten eines aktiven Anwendungsfensters (405), das auf einem primären Computergerät (102) angezeigt wird, wobei das primäre Computergerät mit einem Benutzerkonto assoziiert ist, wobei die Inhalte des aktiven Anwendungsfensters, das auf dem primären Computergerät angezeigt wird, Text beinhalten, der durch einen Benutzer unter Nutzung des primären Computergeräts eingegeben wird;
Ermitteln eines oder mehrerer Kandidatencomputergeräte, die mit dem Benutzerkonto assoziiert sind;
Erhalten von Standortinformationen für das eine oder die mehreren Kandidatencomputergeräte;
Auswählen eines von dem einen oder den mehreren Computergeräten, die basierend auf der erhaltenen Standortinformationen als in der Nähe des primären Computergeräts befindlich, als ein sekundäres Computergerät (104) ermittelt wurden;
Auswählen eines oder mehrerer Suchergebnisse (415) aus einer ausgeführten Suchanfrage, die auf dem vom Benutzer eingegebenen Text basiert und in dem aktiven Anwendungsfenster angezeigt wird; und
Bereitstellen des einen oder der mehreren ausgewählten Suchergebnisse zur Anzeige auf dem sekundären Computergerät, während das aktive Anwendungsfenster auf dem primären Computergerät angezeigt wird.

11. System nach Anspruch 10, wobei die Operationen zum Ermitteln der Inhalte des aktiven Anwendungsfensters, das auf dem primären Computergerät angezeigt wird, umfassen:
Empfangen, über eine Anwendungsprogrammierschnittstelle, der Inhalte des aktiven Anwendungsfensters, das auf dem primären Computergerät angezeigt wird, von einer aktiven Anwendung auf dem primären Computergerät.

12. System nach Anspruch 11, wobei das aktive Anwendungsfenster, das auf dem primären Computergerät angezeigt wird, durch eine Web-Anwendung erzeugt wird, die von einem Server gehostet wird, und wobei die Operationen zum Ermitteln der Inhalte des aktiven Anwendungsfensters, das auf dem primären Computergerät angezeigt wird, umfassen:
Zugreifen auf die Inhalte des aktiven Anwendungsfensters von dem Server, der die Web-Anwendung hostet.

13. Nichtflüchtiges maschinenlesbares Medium, das darauf gespeicherte Anweisungen umfasst, die, wenn sie von einer Maschine ausgeführt werden, die Maschine veranlassen, Operationen auszuführen, umfassend:
Ermitteln von Inhalten, die durch einen Benutzer in einem aktiven Anwendungsfenster (405), das auf einem primären Computergerät (102) angezeigt wird, eingegeben werden, wobei das primäre Computergerät mit einem Benutzerkonto assoziiert ist, wobei die Inhalte des aktiven Anwendungsfensters, das auf dem primären Computergerät angezeigt wird, Text beinhalten, der durch einen Benutzer unter Nutzung des primären Computergeräts eingegeben wird;
Identifizieren eines sekundären Computergeräts (104), das mit dem Benutzerkonto assoziiert ist und sich in der Nähe des primären Computergeräts befindet;
Auswählen eines oder mehrerer Suchergebnisse (415) aus einer ausgeführten Suchanfrage, die auf dem vom Benutzer eingegebenen Text basiert und in dem aktiven Anwendungsfenster angezeigt wird; und
Bereitstellen des einen oder der mehreren ausgewählten Suchergebnisse zur Anzeige auf dem sekundären Computergerät, während das aktive Anwendungsfenster auf dem primären Computergerät angezeigt wird.

14. Nichtflüchtiges maschinenlesbares Medium nach Anspruch 13, wobei die Operationen zum Ermitteln der Inhalte, die durch den Benutzer in dem aktiven Anwendungsfenster, das auf dem primären Computergerät angezeigt wird, eingegeben werden, umfassen:
Empfangen, über eine Anwendungsprogrammierschnittstelle, der Inhalte, die durch den Benutzer in dem aktiven Anwendungsfenster, das auf dem primären Computergerät angezeigt wird, eingegeben werden, von einer aktiven Anwendung auf dem primären Computergerät.

15. Nichtflüchtiges maschinenlesbares Medium nach Anspruch 13, wobei das aktive Anwendungsfenster, das auf dem primären Computergerät angezeigt wird, durch eine Web-Anwendung, die durch einen Server gehostet wird, erzeugt wird, und wobei die Operationen zum Ermitteln der Inhalte, die durch den Benutzer in dem aktiven Anwendungsfenster, das auf dem primären Computergerät angezeigt wird, eingegeben werden, umfassen:
Zugreifen auf die Inhalte des aktiven Anwendungsfensters von dem Server, der die Web-Anwendung hostet.

## Revendications

1. Procédé mis en œuvre par ordinateur, comprenant :
la détermination du contenu d'une fenêtre d'application active (405) affichée sur un dispositif informatique primaire (102), le dispositif informatique primaire étant associé à un compte d'utilisateur, dans lequel le contenu de la fenêtre d'application active affichée sur le dispositif informatique primaire comprend le texte entré par un utilisateur à l'aide du dispositif informatique primaire ;
l'identification d'un dispositif informatique secondaire (104) associé au compte d'utilisateur et situé à proximité du dispositif informatique primaire ;
la sélection d'un ou plusieurs résultats de recherche (415) à partir d'une interrogation de recherche exécutée qui est basée sur le texte entré par l'utilisateur et affiché dans la fenêtre d'application active ; et
la fourniture du ou des résultats de recherche pour affichage sur le périphérique informatique secondaire alors que la fenêtre d'application active est affichée sur le périphérique informatique primaire.

2. Procédé mis en œuvre par ordinateur selon la revendication 1, dans lequel la détermination du contenu de la fenêtre d'application active affichée sur le dispositif informatique primaire comprend :
la réception de données de table de bits de la fenêtre d'application active affichée sur le périphérique informatique primaire ; et
le traitement des données de table de bits reçues en utilisant la reconnaissance de caractères optiques pour déterminer le contenu de la fenêtre d'application active.

3. Procédé mis en œuvre par ordinateur selon la revendication 1, dans lequel la détermination du contenu de la fenêtre d'application active affichée sur le dispositif informatique primaire comprend :
la réception, par l'intermédiaire d'une interface de programmation d'application, du contenu de la fenêtre d'application active affichée sur le dispositif informatique primaire à partir d'une application active sur le dispositif informatique primaire.

4. Procédé mis en œuvre par ordinateur selon la revendication 1, dans lequel la fenêtre d'application active affichée sur le dispositif informatique primaire est générée par une application Web hébergée par un serveur (108) et dans lequel la détermination du contenu de la fenêtre d'application active affichée sur le dispositif informatique primaire comprend :
l'accès au contenu de la fenêtre d'application active depuis le serveur hébergeant l'application Web.

5. Procédé mis en œuvre par ordinateur selon la revendication 1, dans lequel l'interrogation de recherche est basée sur un titre du contenu affiché dans la fenêtre d'application active.

6. Procédé mis en œuvre par ordinateur selon la revendication 1, dans lequel l'interrogation de recherche est sélectionnée à partir du contenu affiché en fonction du moment plus ou moins récent où un mot ou une expression a été entré(e) dans le contenu.

7. Procédé mis en œuvre par ordinateur selon la revendication 1, dans lequel l'interrogation de recherche est sélectionnée à partir du contenu affiché en fonction de la fréquence à laquelle un mot ou une expression est présent(e) dans le contenu.

8. Procédé mis en œuvre par ordinateur selon la revendication 1, dans lequel l'identification du dispositif informatique secondaire comprend :
la détermination d'un ou plusieurs dispositifs informatiques candidats associés au compte d'utilisateur ;
l'obtention d'informations de localisation pour le ou les dispositifs informatiques candidats ; et
la sélection d'un parmi le ou les dispositifs informatiques candidats comme dispositif informatique secondaire en fonction des informations de localisation obtenues.

9. Procédé mis en œuvre par ordinateur selon la revendication 1, dans lequel le texte est entré par l'utilisateur par l'intermédiaire de l'un des éléments suivants : une entrée vocale de l'utilisateur, une entrée tactile de l'utilisateur, un clavier et un écran tactile.

10. Système (700), comprenant :
un ou plusieurs circuits de processeur (712) ; et
un support lisible par ordinateur non transitoire (702, 704, 710) comprenant des instructions qui y sont stockées qui, lorsqu'elles sont exécutées par le ou les circuits de processeur, amènent le ou les circuits de processeur à effectuer des opérations comprenant :
la détermination du contenu d'une fenêtre d'application active (405) affichée sur un dispositif informatique primaire (102), le dispositif informatique primaire étant associé à un compte d'utilisateur, dans lequel le contenu de la fenêtre d'application active affichée sur le dispositif informatique primaire comprend le texte entré par un utilisateur à l'aide du dispositif informatique primaire ;
la détermination d'un ou plusieurs dispositifs informatiques candidats associés au compte d'utilisateur ;
l'obtention d'informations de localisation pour le ou les dispositifs informatiques candidats ;
la sélection d'un parmi le ou les dispositifs informatiques, déterminés comme étant à proximité du dispositif informatique primaire en fonction des informations de localisation obtenues, comme dispositif informatique secondaire (104) ;
la sélection d'un ou plusieurs résultats de recherche (415) à partir d'une interrogation de recherche exécutée qui est basée sur le texte entré par l'utilisateur et affiché dans la fenêtre d'application active ; et
la fourniture du ou des résultats de recherche pour affichage sur le périphérique informatique secondaire alors que la fenêtre d'application active est affichée sur le périphérique informatique primaire.

11. Système selon la revendication 10, dans lequel les opérations de détermination du contenu de la fenêtre d'application active affichée sur le dispositif informatique primaire comprennent :
la réception, par l'intermédiaire d'une interface de programmation d'application, du contenu de la fenêtre d'application active affichée sur le dispositif informatique primaire à partir d'une application active sur le dispositif informatique primaire.

12. Système selon la revendication 11, dans lequel la fenêtre d'application active affichée sur le dispositif informatique primaire est générée par une application Web hébergée par un serveur et dans lequel les opérations de détermination du contenu de la fenêtre d'application active affichée sur le dispositif informatique primaire comprennent :
l'accès au contenu de la fenêtre d'application active depuis le serveur hébergeant l'application Web.

13. Support lisible par machine non transitoire comprenant des instructions qui y sont stockées qui, lorsqu'elles sont exécutées par une machine, amènent la machine à effectuer des opérations comprenant :
la détermination du contenu entré par un utilisateur dans une fenêtre d'application active (405) affichée sur un dispositif informatique primaire (102), le dispositif informatique primaire étant associé à un compte d'utilisateur, dans lequel le contenu de la fenêtre d'application active affichée sur le dispositif informatique primaire comprend du texte entré par un utilisateur à l'aide du dispositif informatique primaire ;
l'identification d'un dispositif informatique secondaire (104) associé au compte d'utilisateur et situé à proximité du dispositif informatique primaire ;
la sélection d'un ou plusieurs résultats de recherche (415) à partir d'une interrogation de recherche exécutée qui est basée sur le texte entré par l'utilisateur et affiché dans la fenêtre d'application active ; et
la fourniture du ou des résultats de recherche pour affichage sur le périphérique informatique secondaire alors que la fenêtre d'application active est affichée sur le périphérique informatique primaire.

14. Support lisible par machine non transitoire selon la revendication 13, dans lequel les opérations de détermination du contenu entré par l'utilisateur dans la fenêtre d'application active affichée sur le dispositif informatique primaire comprennent :
la réception, par l'intermédiaire d'une interface de programmation d'application, du contenu entré par l'utilisateur dans la fenêtre d'application active affichée sur le périphérique informatique primaire en provenance d'une application active sur le dispositif informatique primaire.

15. Support lisible par machine non transitoire selon la revendication 13, dans lequel la fenêtre d'application active affichée sur le dispositif informatique primaire est générée par une application Web hébergée par un serveur et dans lequel les opérations de détermination du contenu entré par l'utilisateur dans la fenêtre d'application active affichée sur le dispositif informatique primaire comprennent :
l'accès au contenu de la fenêtre d'application active depuis le serveur hébergeant l'application Web.
